Europäisches Patentamt

European Patent Office

Office européen des brevets

(11) Veröffentlichungsnummer : **0 125 477**
**B1**

# (12) EUROPÄISCHE PATENTSCHRIFT

(45) Veröffentlichungstag der Patentschrift :
16.06.87

(51) Int. Cl.⁴ : **C 03 B 40/02**

(21) Anmeldenummer : 84103877.1

(22) Anmeldetag : 07.04.84

(54) Verfahren zum Einbringen eines Trenn- bzw. Schmiermittels in die Vorform einer IS- oder RIS-Maschine.

(30) Priorität : 16.04.83 DE 3313851

(43) Veröffentlichungstag der Anmeldung :
21.11.84 Patentblatt 84/47

(45) Bekanntmachung des Hinweises auf die Patenterteilung : 16.06.87 Patentblatt 87/25

(84) Benannte Vertragsstaaten :
AT BE CH FR GB IT LI LU NL SE

(56) Entgegenhaltungen :
DE-A- 2 234 364
FR-A- 1 285 586
US-A- 3 580 711

(73) Patentinhaber : **RUHRGLAS Aktiengesellschaft**
**Ruhrglasstrasse 50**
**D-4300 Essen 12 (DE)**

(72) Erfinder : **Hübner, Jochen**
**Flöttestrasse 46**
**D-4250 Bottrop-Welheim (DE)**
Erfinder : **Knoth, Werner-Dieter**
**Byfangerstrasse 175**
**D-4300 Essen 15 (DE)**
Erfinder : **Hüllen, Helmut**
**Dreilindenstrasse 93**
**D-4300 Essen 1 (DE)**

(74) Vertreter : **Spalthoff, Adolf, Dipl.-Ing.**
**Pelmanstrasse 31 P.O. Box 34 02 20**
**D-4300 Essen 1 (DE)**

EP 0 125 477 B1

**Beschreibung**

Die Erfindung betrifft ein Verfahren zum Einbringen eines Trenn- bzw. Schmiermittels in die Vorform einer IS- oder RIS-Maschine zur Herstellung von Hohlglas, wobei auf die eine Stirnseite der Vorform ein Tropfring aufsetzbar ist und die andere Stirnseite mittels einer Mündungsschere verschließbar ist und der einen Stirnseite eine oder mehrere Sprühdüsen für das Trennbzw. Schmiermittel und der anderen Stirnseite eine Pegeleinrichtung zugeordnet ist.

Bei der Herstellung von Hohlglas in IS- und RIS-Maschinen ist es bekannt, auf die Innenwandungen der Vorformen Trenn- bzw. Schmiermittel aufzutragen. Die Erzeugung einer Zwischenschicht aus dem Trenn- bzw. Schmiermittel zwischen dem flüssigen Glas und der aus Metall oder anderen Werkstoffen bestehenden Vorform ist erforderlich, um beispielsweise ein Kleben des Glases zu verhindern sowie den Wärmeübergang vom Glas zu der Vorform steuerbarer zu machen.

Es ist bekannt, das Trenn- bzw. Schmiermittel von Hand aufzutragen. Dies umsomehr, weil die bekanntgewordenen maschinellen Vorrichtungen und Verfahren bis hin zum völlig selbsttätigen Betrieb mit einer Vielzahl von Unzulänglichkeiten behaftet sind. Dies trifft besonders auf den Verformungsprozeß von Hohlglas in Reihenmaschinen, d. h. den sog. IS- und RIS-Maschinen, zu. Diese Reihenmaschinen verformen bekanntlich in zwei Stufen, nämlich in der Vorform- und in der Fertigformstufe. Besonders bei der Vorform ist der Aufbau einer Zwischenschicht aus einem Trenn- bzw. Schmiermittel Voraussetzung für ein einwandfreies Fließen der Wärme und damit der Erzielung einer homogenen Glasviskosität an den verformungstechnisch wichtigen Stellen der Vorform.

Die Vorformen können bei den Reihenmaschinen geteilt sein oder aber auch aus einem Stück bestehen. Bei den geteilten Formen tritt das Problem auf, die offene Formentrennhälfte beim Einbringen des Trenn- bzw. Schmiermittels nicht ungewollt mit zu beschichten. Um diese Schwierigkeit zu beheben, ist ein maschinelles Beschichtungsverfahren für die Innenwandungen der Vorformen anzustreben, welches bei geschlossener Vorform durchführbar ist. Zu diesem Zwecke ist es bekannt, bei geschlossenen Segmenten der Vorform das Trenn- bzw. Schmiermittel in diese einzusprühen. Zur Verwirklichung sind mannigfaltige Ausführungsformen und Verfahren vorgeschlagen worden. Allen Lösungen haftet jedoch der Nachteil an, daß es bisher nicht gelungen ist, über die Länge der Vorform und in ihrer Rundumverteilung zu einer gleichmäßigen Beschichtung zu gelangen. Bei dem Einsprühen des Trenn- bzw. Schmiermittels von oben her entsteht in der Vorform ein Luftpolster, gegen das das Sprühmittel angeblasen werden muß, da die Vorform während des Herstellungsprozesses an ihrer Unterseite mittels der Mündungsschere verschlossen wird. Daher ist eine gleichmäßige Verteilung nicht möglich. Bei der für den Sprühvorgang zur Verfügung stehenden, vergleichsweise geringen Zeit ist bei den bekannten Ausführungen die Verwirbelung des Sprühmittels mit dem gewünschten Gleichmäßigkeitsgrad für den Niederschlag auf der Innenwandung der Vorform vielfach völlig unzureichend. Um daher, soweit wie dies überhaupt möglich ist, genügend Trenn- bzw. Schmiermittel überall als Zwischenschicht aufzubauen, muß eine erheblich größere Sprühmittelmenge eingegeben werden als an sich erforderlich ist.

Von diesem Stand der Technik ausgehend liegt der Erfindung die Aufgabe zugrunde, ein Verfahren der eingangs genannten Art zu schaffen, welches eine schnelle und gleichmäßige Beschichtung der Innenwandungen von Vorformen ermöglicht, wobei überdies nur eine vergleichsweise geringe Menge des Trenn- bzw. Schmiermittels benötigt wird.

Erfindungsgemäß wird dies dadurch erreicht, daß in den an sich bekannten Arbeitsablauf der IS- bzw. RIS-Maschine ein Zwischentakt eingefügt ist, in dem die Mündungsschere in eine Zwischenstellung zwischen Vor- und Fertigform gebracht wird, wobei während des Verbleibs der Mündungsschere in dieser Zwischenstellung bei geschlossenen Segmenten der Vorform das Einsprühen des Trenn- bzw. Schmiermittels erfolgt. Die genaue Stellung der Mündungsschere in ihrer Zwischenposition ist in keiner Weise kritisch. Die Sprühdüse bzw. -düsen werden mit dem Tropfring über die nun nach unten hin offene Vorform geschwenkt. Zeitlich, periodisch oder beliebig, selbsttätig oder von Hand gesteuert, wird nun der Sprühvorgang ausgelöst. Dieser kann in bekannter Weise einen gasförmigen Sprühmittelträger zusammen mit dem eigentlichen Trenn- bzw. Schmiermittel eingeben oder auf andere Art, z. B. durch Eindüsen des Beschichtungsmittels, selbst trägerfrei durch Überdruck allein erfolgen.

Für eine einwandfreie Wirkung der Einrichtung ist es entscheidend, daß der Preßpegel der unter der Vorform mit einem gewissen Abstand befindlichen Pegeleinrichtung, der durch Eindrücken in den Glastropfen den ersten Hohlraum schafft, beim Blas-Blas-Verfahren freibleibt von der Beschichtungsmasse aus dem Sprühkegel.

Dies wird in einfacher Weise erreicht durch einen nach Menge, Zeit und Richtung gesteuerten Luftgegenstoß. Zu diesem Zwecke ist der Pegelzylinder mit Bohrungen ausgerüstet, die gegen die diesen zugeordnete Stirnseite der Vorform gerichtet sind.

Die gleiche Wirkung kann auch durch einen Schieber erreicht werden, welcher zwischen Vorform und Pegeleinrichtung ein- und ausfahrbar ist, und zwar während des Sprühvorganges.

Für das Preß-Blas-Verfahren hingegen, bei dem der Preßpegel tief in den Glastropfen ohne Luftunterstützung eindringt, kann eine Benetzung mit dem Beschichtungsmittel wünschenswert sein. In diesem Falle ist eine Abdeckung des Pegels nicht erforderlich. Falls erwünscht, kann aber eine Abdeckung des Pegels in gleicher Weise, wie vorstehend erörtert, erfolgen.

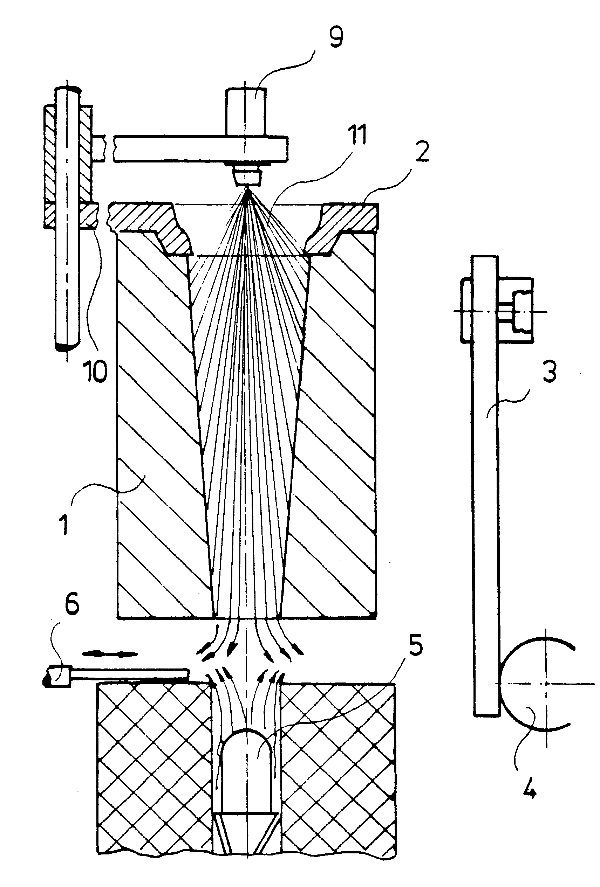

Ein Ausführungsbeispiel der Erfindung ist an Hand der Zeichnung naher erläutert, und zwar zeigt diese eine teilweise geschnittene Ansicht einer Vorform mit Pegeleinrichtung. Auf die Vorform 1, deren Segmente rundum geschlossen sind, ist der Tropfring 2 aufgesetzt. Die die Unterseite der Vorform 2 verschließende Mündungsschere 3 ist in ihrer Zwischenstellung zwischen Vorform 1 und der nicht weiter dargestellten Fertigform einer Reihenmaschine gezeigt. Die Drehachse der Mündungsschere 3 ist mit 4 bezeichnet.

Unterhalb der Vorform 1 ist die Pegeleinrichtung vorgesehen, deren Pegel 5 sich in seiner Tiefstellung befindet. Die für den Blas-Blas-Prozeß erforderliche Abdeckung des Pegels 5 erfolgt beispielsweise durch den mechanischen Schieber 6 oder aber durch einen Gegenstoß mit Luft 7, die aus Öffnungen 8 des Pegelzylinders austritt.

Der Sprühvorgang selbst erfolgt durch die Sprühdüse 9. Diese sitzt zentriert und arretiert auf dem Arm 10 des Tropfringes 2 und ist mit diesem in der Bewegung gekoppelt, z. B. über einen nicht weiter dargestellten Mitnehmerstift. Der Arm 10 wird in bekannter Weise vertikal und horizontal mehrachsig bewegt. Je nach Form der Düse 9 verteilt sich das Sprühmittel 11 axial und rundum innerhalb der Vorform 1.

## Patentansprüche

1. Verfahren zum Einbringen eines Trenn- bzw. Schmiermittels in die Vorform einer IS- oder RIS-Maschine zur Herstellung von Hohlglas, wobei auf die eine Stirnseite der Vorform (1) ein Tropfring (2) aufsetzbar ist und die andere Stirnseite der Vorform (1) mittels einer Mündungsschere (3) verschließbar ist und der einen Stirnseite eine oder mehrere Sprühdüsen (9) für das Trenn- bzw. Schmiermittel und der anderen Stirnseite eine Pegeleinrichtung (5, 7, 8) zugeordnet ist, dadurch gekennzeichnet, daß in den an sich bekannten Arbeitsablauf der IS- bzw. RIS-Maschine ein Zwischentakt eingefügt wird, in dem die Mündungsschere (3) in eine Zwischenstellung zwischen Vor- (1) und Fertigform gebracht wird, wobei während des Verbleibs der Mündungsschere (3) in der Zwischenstellung bei geschlossenen Segmenten der Vorform (1) das Einsprühen des Trenn- bzw. Schmiermittels erfolgt.

2. Verfahren nach Anspruch 1, dadurch gekennzeichnet, daß während des Sprühvorganges der Pegel (5) mittels eines zwischen Vorform (1) und Pegeleinrichtung ein- und ausfahrbaren Schiebers (6) abgedeckt ist.

3. Verfahren nach Anspruch 1, dadurch gekennzeichnet, daß während des Sprühvorganges aus den Öffnungen (8) des Pegelzylinders ein gegen die Vorform (1) gerichteter Luft-Gegenstoß erfolgt.

## Claims

1. Method of incorporating a separating or lubricating agent into the premould of an IS or RIS machine for the production of hollow glassware, with provision for fitting a drip ring (2) onto the end face of the premould (1), the other end face of the premould (1) being closable by a mouth shear (3), one or a plurality of spray nozzles (9) for the separating or lubricating agent being associated with one end face while a level device (5, 7, 8) is associated with the other end face, characterised in that incorporated into the per se known working cycle of the IS or RIS machine is an intermediate stroke in which the mouth shear (3) is brought into an intermediate position between premould (1) and finished mould, the separating or lubricating agent being sprayed while the segments of the premould (1) are closed and while the mouth shear (3) remains in the intermediate position.

2. Method according to Claim 1, characterised in that during the spraying process, the level (5) is covered by a slide (6) which can be inserted into and withdrawn from the gap between premould (1) and level device.

3. Method according to Claim 1, characterised in that during the spray process, a counter-blast of air is ejected from the orifices (8) of the level cylinder and towards the premould (1).

## Revendications

1. Procédé d'introduction d'un agent de séparation ou d'un lubrifiant dans le moule de préformage d'une machine IS ou RIS pour la fabrication de verre creux, dans lequel un anneau anti-gouttes (2) est placé sur une face frontale du moule de préformage (1) et l'autre face frontale du moule (1) est fermée au moyen d'une pince à goulot (3), une ou plusieurs buses de pulvérisation (9) pour l'agent séparateur ou le lubrifiant étant associées à l'une des faces frontales et un dispositif à mandrin (5, 7, 8) à l'autre face frontale, caractérisé par le fait que dans le cycle de travail en soi connu de la machine IS ou RIS, on introduit une phase intermédiaire pendant laquelle on amène la pince à goulot (3) dans une position intermédiaire entre le moule de préformage (1) et le moule de finition, la pulvérisation de l'agent de séparation ou du lubrifiant s'effectuant pendant le séjour de la pince à goulot (3) à la position intermédiaire, les segments du moule de préformage (1) étant fermés.

2. Procédé selon la revendication 1 caractérisé par le fait que pendant le processus de pulvérisation, le mandrin 5 est recouvert au moyen d'une coulisse (6) que l'on peut engager entre le moule de préformage 1 et le dispositif à mandrin et l'en retirer.

3. Procédé selon la revendication 1, caractérisé par le fait que pendant le processus de pulvérisation, un souffle d'air antagoniste dirigé contre le moule de préformage (1) est émis par les ouvertures (8) du mandrin.